# EUROPÄISCHE PATENTSCHRIFT

(11) **EP 3 469 398 B1**
(45) Veröffentlichungstag und Bekanntmachung des Hinweises auf die Patenterteilung: **05.06.2024**
(21) Anmeldenummer: 17717400.0
(22) Anmeldetag: 12.04.2017
(51) Int. Cl.: G01S 17/58, G01S 7/48, G01S 7/481, B60W 40/068

(54) **SENSORVORRICHTUNG FÜR EIN FAHRZEUG**
SENSOR APPARATUS FOR A VEHICLE
DISPOSITIF FORMANT CAPTEUR POUR UN VÉHICULE

(30) Priorität: 13.06.2016 DE 102016210379
(43) Veröffentlichungstag der Anmeldung: 17.04.2019
(73) Patentinhaber: Robert Bosch GmbH, 70442 Stuttgart (DE)
(72) Erfinder: SCHOTT, Dominik Jan, 79108 Freiburg I.Br. (DE); BAUS, Michael, 74321 Bietigheim-Bissingen (DE); HAS, Remigius, 71120 Grafenau-Daetzingen (DE)
(86) Internationale Anmeldenummer: PCT/EP2017/058760
(87) Internationale Veröffentlichungsnummer: WO 2017/215813

(56) Entgegenhaltungen:
- DE-A1- 4 133 359
- DE-A1-102004 060 677
- DE-A1-102007 032 997
- DE-A1-102011 015 527
- DE-A1-102011 081 362
- DE-A1-102014 220 184

## Beschreibung

Die Erfindung betrifft eine Sensorvorrichtung für ein Fahrzeug, insbesondere Kraftfahrzeug, mit zumindest einer Sendeeinrichtung zur Ausgabe eines Lichtstrahls mit einer vorgebbaren Wellenlänge, mit wenigstens eine Empfangseinrichtung zum Erfassen des zumindest einen an einem Objekt reflektierten Lichtstrahls der Sendeeinrichtung, und mit einer Einrichtung, die in Abhängigkeit von dem erfassten reflektierten Lichtstrahl zumindest eine auf das Objekt bezogene Eigenschaft bestimmt.

Ferner betrifft die Erfindung ein Sicherheitssystem für ein Fahrzeug, insbesondere Kraftfahrzeug, mit wenigstens einer Sensorvorrichtung, wie sie oben stehend beschrieben wurde, und mit wenigstens einer Aktoreinrichtung, die in Abhängigkeit von einer durch die Sensorvorrichtung erfassten Fahrbahnbeschaffenheit arbeitet oder angesteuert wird.

Weiterhin betrifft die Erfindung ein Verfahren zum Betreiben der Sensorvorrichtung oder des Sicherheitssystems.

### Stand der Technik

Sensorvorrichtungen, Sicherheitssysteme und Verfahren der eingangs genannten Art sind aus dem Stand der Technik bekannt. Insbesondere im Kraftfahrzeugbau ist die Berücksichtigung eines Reibwerts einer Fahrbahnoberfläche, entlang welcher sich das Kraftfahrzeug bewegt, von Bedeutung für die Ansteuerung von Aktuatoren, die beispielsweise einem Bremssystem oder einem Fahrsicherheitssystem zugehörig sind, um die Fahrsicherheit des Kraftfahrzeugs zu erhöhen. So können beispielsweise, wenn ein verringerter Reibwert festgestellt wird, ein Anfahrtsdrehmoment oder ein Bremsmoment verringert werden, um den Verlust einer Haftung von Rändern des Fahrzeugs auf der Fahrbahnoberfläche zu vermeiden. Dabei ist es insbesondere bekannt, für die Reibwertabschätzung die Fahrbahnoberfläche mittels eines Infrarotsensors abzutasten, welcher einen auf die Fahrbahnoberfläche ausgerichteten Infrarotlichtstrahl erzeugt und den an der Fahrbahnoberfläche reflektierten Infrarotlichtstrahl empfängt.

Die Offenlegungsschrift DE 10 2007 032 997 A1 offenbart eine Fahrerassistenzvorrichtung mit mehreren Sende-Empfängereinrichtungen, wobei eine Sender-Empfangseinrichtung Strahlen mit mindestens zwei unterschiedlichen Wellenlängen aussendet und von der Fahrbahn reflektierte Strahlung erfasst und auswertet und eine andere Sende-Empfangseinrichtung Objekte aus dem Umfeld des Fahrzeugs erfasst. Aus der Offenlegungsschrift DE 10 2014 220 184 sind weiterhin ein Verfahren und eine Vorrichtung zur Bestimmung des aktuellen Reibwerts einer Oberfläche einer vor einem Kraftfahrzeug liegenden Fahrbahn bekannt, wobei die Fahrbahnoberfläche mit Laserpulsen einer Laserlichtquelle angeregt und rückgestreutes Laserlicht nach dem Lidar-Prinzip ausgewertet wird. Weiterhin ist es aus der Offenlegungsschrift DE 10 2011 081 362 A1 bekannt, zur Ermittlung eines Oberflächenzustands ein Reflektionssignal, das eine Lichtintensität und/oder eine Lichtfarbe repräsentiert, einzulesen. Außerdem ist es aus der Offenlegungsschrift DE 10 2011 015 527 A1 bekannt, einen Sensor zur Oberflächendetektion einer Fahrbahn vorzusehen, der eine Lichtquelleneinheit aufweist, die Licht in zumindest zwei voneinander verschiedenen Wellenlängen aussendet, sowie zwei Detektoren zur Ermittlung von reflektiertem Licht. Die Offenlegungsschrift DE 10 2004 060677 A1 zeigt ein optisches System zur Ermittlung einer Geschwindigkeit eines Fahrzeugs. Hierbei werden zeitlich aufeinander folgende Bilder der Straßenoberfläche unter einem Fahrzeug mit einer Kamera aufgenommen. Anhand eines Vergleichs zwischen zwei Bildern wird eine Verschiebung der Straßenoberfläche ermittelt und daraus die relative Geschwindigkeit bestimmt. Eine Beleuchtung unter einem bestimmten Winkel sorgt hierbei für deutliche Schattenbereiche.

### Offenbarung der Erfindung

Die erfindungsgemäße Sensorvorrichtung mit den Merkmalen des Anspruchs 1 hat den Vorteil, dass durch die Sensorvorrichtung sowohl Informationen über die Fahrbahnbeschaffenheit beziehungsweise die Oberfläche, insbesondere der Reibwert einer Oberfläche der Fahrbahn, als auch Informationen über die aktuelle Fahrgeschwindigkeit erfasst werden. Die Sensorvorrichtung vereint somit die Funktionalität von Reibwert- und Geschwindigkeitssensorik in kompakter und kostengünstiger Art und Weise. Erfindungsgemäß ist hierzu vorgesehen, dass die Empfängereinrichtung ein Sensor-Array zur Erfassung von Wellenlängen oder Wellenlängenänderungen des reflektierten Lichtstrahls aufweist, und dass die Einrichtung dazu ausgebildet ist, in Abhängigkeit der erfassten Wellenlängen und/oder Wellenlängenänderungen zumindest eine Oberflächenbeschaffenheit des Objekts sowie eine Relativgeschwindigkeit zu dem Objekt zu bestimmen. Durch das Vorsehen des Sensor-Arrays wird erreicht, dass eine Fahrgeschwindigkeit auf eine einfache Art und Weise erfassbar ist. Dabei wird im Wesentlichen eine Auswertung vorgenommen, wie sie beispielsweise bei Computermäusen mit Lasersensor und Lichtgranulation genutzt wird. Mittels des Sensor-Arrays werden Veränderungen des reflektierten Lichts verfolgt und aus dieser Verfolgung die Relativgeschwindigkeit zwischen der Sensorvorrichtung und dem Objekt, auf welchem der Lichtstrahl reflektiert wird, bestimmt. Vorliegend wird dies dazu genutzt, die Fahrgeschwindigkeit des Fahrzeugs zu ermitteln, während gleichzeitig in Abhängigkeit von erfassten Wellenlängen oder Wellenlängenänderungen des reflektierten Lichts die Oberflächenbeschaffenheit des Objekts, insbesondere der Fahrbahn überwacht wird.

Gemäß einer bevorzugten Weiterbildung der Erfindung ist vorgesehen, dass die Einrichtung dazu ausgebildet ist, in Abhängigkeit von den Wellenlängen und/oder Wellenlängenänderungen einen Reibwert der Oberfläche, auf welcher der Lichtstrahl reflektiert wird, zu bestimmen. Mittels der Sensorvorrichtung wird somit eine wellenlängenabhängige Änderung von optischen Eigenschaften des Objekts beziehungsweise der Fahrbahnoberfläche festgestellt, um insbesondere den Reibwert der Oberfläche zu erfassen.

Weiterhin ist bevorzugt vorgesehen, dass der Sensor mehrere Sendeeinrichtungen aufweist, von denen zumindest zwei, insbesondere drei Lichtstrahlen mit unterschiedlichen Wellenlängen erzeugen. Die Sendeeinrichtungen sind insoweit unterschiedlich ausgebildet, als dass sie jeweils einen Lichtstrahl mit einer Wellenlänge erzeugen, der sich von dem Lichtstrahl zumindest einer weiteren Sendeeinrichtung des Sensors unterscheidet. Durch das Aussenden von Lichtstrahlen mit unterschiedlichen Wellenlängen ist insbesondere eine redundante Erfassung der Fahrgeschwindigkeit beziehungsweise der Relativgeschwindigkeit zwischen Sensorvorrichtung und Fahrer beziehungsweise Objekt gewährleistet. Insbesondere ist vorgesehen, dass drei Sendeeinrichtungen vorgesehen sind, die jeweils einen Lichtstrahl mit einer zu den anderen Sendeeinrichtungen unterschiedlichen Wellenlänge erzeugen. Besonders bevorzugt ist vorgesehen, dass die Sendeeinrichtungen als Infrarotlaserdioden ausgebildet sind, die einen Infrarotlichtstrahl erzeugen. Die Infrarotlaserdioden sind kostengünstig einsetzbar und erlauben eine genaue Ausrichtung des Lichtstrahls auf das zu prüfende beziehungsweise das zu überwachende Objekt, insbesondere die Fahrbahn.

Besonders bevorzugt ist vorgesehen, dass eine erste der Infrarotlaserdioden dazu ausgebildet ist, einen Lichtstrahl mit einer Wellenlänge von λ₁=980nm zu erzeugen, eine zweite der Laserdioden einen Lichtstrahl mit einer Wellenlänge von λ₂=1310nm und eine dritte der Laserdioden einen Lichtstrahl mit einer Wellenlänge von λ₃=1550nm. Durch die derart gewählten unterschiedlichen Wellenlängen der drei Lichtstrahlen der drei Infrarotlaserdioden wird eine vorteilhafte Erfassung der Fahrbahnbeschaffenheit beziehungsweise des Reibwerts der Oberfläche des Objekts sowie eine verlässliche Geschwindigkeitsermittlung gewährleistet.

Weiterhin ist bevorzugt vorgesehen, dass die Empfängereinrichtung als Infrarotbreitbanddetektor ausgebildet ist, um die unterschiedlichen Wellenlängen der reflektierten Lichtstrahlen zu erfassen. Hierdurch ist eine Miniaturisierung der Sensorvorrichtung bis hin zur Einbettung in ein einziges Gehäuse möglich, das beispielsweise in Reifennähe an der Karosserie eines Kraftfahrzeugs angebracht werden kann, um den Reibwert der Fahrbahnoberfläche für jeden Reifen individuell zu erfassen und zu berücksichtigen. Damit ist es möglich, für jeden Reifen beispielsweise den aktuellen Schlupf und Traktion zu bestimmen und Sicherheitseinrichtungen des Kraftfahrzeugs entsprechend anzusteuern beziehungsweise einzustellen, um den erfassten Schlupf und Traktion gerecht zu werden.

Das erfindungsgemäße Sicherheitssystem mit den Merkmalen des Anspruchs 7 zeichnet sich durch die erfindungsgemäße Sensorvorrichtung aus. Es ergeben sich dabei die bereits genannten Vorteile. Insbesondere ist vorgesehen, dass die Aktoreinrichtung als Bremseinrichtung oder als ABS-, ASR- oder ESP-Gerät ausgebildet ist, das in Abhängigkeit von einer aktuellen Fahrbahnbeschaffenheit angesteuert wird, um ein optimales Fahrergebnis zu erzielen.

Insbesondere ist vorgesehen, dass zumindest zwei Rändern des Fahrzeugs, insbesondere jedem Rad des Fahrzeugs, jeweils eine der Sensorvorrichtungen zugeordnet ist, um eine radindividuelle Bestimmung und Berücksichtigung der Fahrbahnbeschaffenheit zu ermöglichen. Insbesondere sind die Sensorvorrichtungen in Vorwärtsfahrtrichtung gesehen vor dem jeweiligen Rad angeordnet, um die Fahrbahnbeschaffenheit des Fahrbahnabschnitts zu erfassen, der unmittelbar vor dem jeweiligen Rad liegt.

Gemäß einer bevorzugten Weiterbildung der Erfindung ist vorgesehen, dass die jeweilige Sensorvorrichtung dazu ausgebildet/angeordnet ist, den jeweiligen Lichtstrahl senkrecht oder nahezu senkrecht oder in einem vorbestimmten Winkel auf die Fahrbahn zu lenken. Durch die senkrechte oder nahezu senkrechte Ausrichtung wird eine einfache Variante der Sensorvorrichtung realisiert, welche den Einfluss von Fahrzeugschwankungen und Bodenwelligkeit minimiert, um den Anspruch an eine konstante Entfernung der Sensorvorrichtung zu einem Referenzobjekt, beziehungsweise zu der Fahrbahn einzuhalten. Durch das Lenken des jeweiligen Lichtstrahls in einem vorgegebenen Winkel auf die Fahrbahn, insbesondere derart, dass der Lichtstrahl in Vorwärtsfahrtrichtung gerichtet ist, wird der Vorteil erreicht, dass trotz naher Anordnung der Sensorvorrichtung zu dem Rad, die Fahrbahnbeschaffenheit vor dem Rad in einem Abstand ermittelt wird, welcher gewährleistet, dass die Berechnung des Reibwerts der Fahrbahn und/oder der Geschwindigkeit sowie die daraus erfolgende Ansteuerung der Aktoreinrichtung erfolgt, bevor das Rad, welchem die jeweilige Sensorvorrichtung zugeordnet ist, die Stelle der Fahrbahn erreicht, welche durch die Sensorvorrichtung abgetastet wurde.

Das erfindungsgemäße Verfahren mit den Merkmalen des Anspruchs 10 zeichnet sich dadurch aus, dass in Abhängigkeit der erfassten Wellenlängen und/oder Wellenlängenänderungen des reflektierten Lichts eine Fahrgeschwindigkeit des Fahrzeugs und ein Reibwert des Fahrbahnoberfläche ermittelt und bei der Ansteuerung der wenigstens einen Aktoreinrichtung berücksichtigt werden. Es ergeben sich hierbei die bereits genannten Vorteile. Weitere Vorteile und bevorzugte Merkmale und Merkmalskombinationen ergeben sich insbesondere aus dem zuvor Beschriebenen sowie aus den Ansprüchen.

Im Folgenden soll die Erfindung anhand der Zeichnung näher erläutert werden. Dazu zeigen
- Figur 1: ein Fahrzeug in einer vereinfachten Seitenansicht,
- Figur 2: eine vorteilhafte Sensorvorrichtung eines Sicherheitssystems des Fahrzeugs in einer vereinfachten Darstellung und
- Figuren 3A und 3B: unterschiedliche Ausgestaltungen der Sensorvorrichtung.

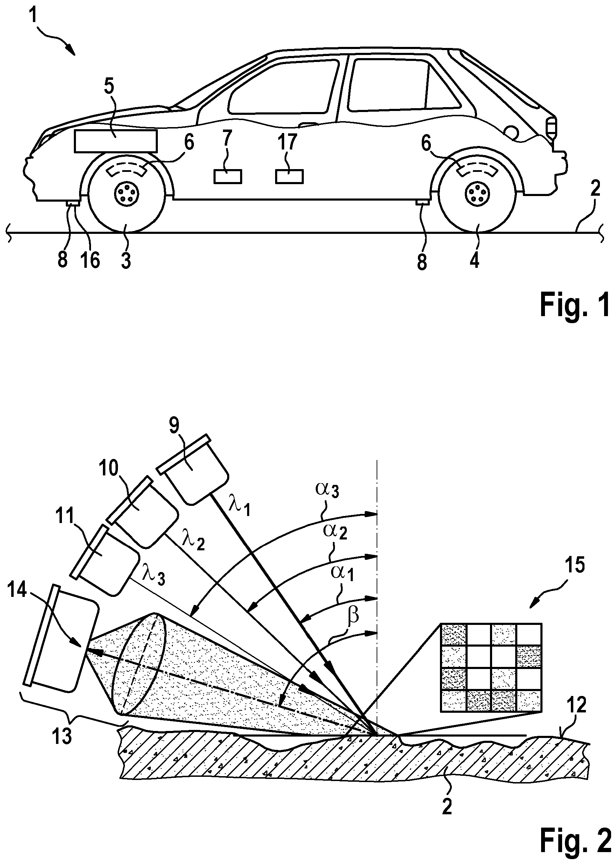

Figur 1 zeigt in einer vereinfachten Seitenansicht ein Fahrzeug 1, das sich auf einer Fahrbahn 2 befindet. Das Fahrzeug 1 weist zwei Radachsen mit jeweils zwei Rädern 3, 4 auf, von denen zumindest die Räder 3, 4 einer der Radachsen durch eine Antriebseinrichtung 5, die insbesondere als Verbrennungsmotor oder Elektromotor ausgebildet ist, antreibbar sind. Weiterhin ist den Rädern 3, 4 jeweils eine Radbremseinrichtung 6 zugeordnet. Die Radbremseinrichtungen 6 sind in ein Sicherheitssystem 7 integriert, das beispielsweis als ABS-, ESP-, oder ASR-System ausgebildet ist und die Radbremseinrichtungen 6 in Abhängigkeit von einem Fahrerbremswunsch oder Beschleunigungswunsch und in Abhängigkeit einer aktuellen Haftreibung zwischen den Rädern 3, 4 und der Fahrbahn 2 ansteuert.

Gemäß dem vorliegenden Ausführungsbeispiel ist jedem der Räder 3, 4 jeweils eine Sensorvorrichtung 8 zugeordnet, welche dazu dient, die Oberflächenbeschaffenheit der Fahrbahn 2 sowie eine Fahrgeschwindigkeit des Fahrzeugs 1 zu überwachen.

Gemäß einem weiteren Ausführungsbeispiel ist bevorzugt vorgesehen, dass das Fahrzeug 1 lediglich eine der Sensorvorrichtungen 8 oder nur zwei Sensorvorrichtungen 8 aufweist, wobei die zwei Sensorvorrichtungen 8 jeweils einem Rad einer Radachse zugeordnet sind.

Figur 2 zeigt in einer vereinfachten Darstellung eine vorteilhafte Ausbildung der Sensorvorrichtung 8. Die Sensorvorrichtung 8 weist mehrere Sendeeinrichtungen 9, 10, 11 auf, die jeweils als Infrarotlaserdioden ausgebildet sind und jeweils einen Lichtstrahl mit einer vorbestimmten Wellenlänge λ₁, λ₂ und λ₃ erzeugen. Die Sendeeinrichtungen 9, 10, 11 sind dabei derart ausgerichtet, dass die jeweiligen Lichtstrahlen auf die gleiche Stelle oder nahezu auf die gleiche Stelle der Oberfläche 12 der Fahrbahn 2 treffen. Dabei sind die Sendeeinrichtungen 9, 10, 11 derart ausgerichtet, dass die Lichtstrahlen schräg auf die Oberfläche 12 auftreffen, wobei vorliegend die Lichtstrahlen der Sensoreinrichtungen 9, 10, 11 in unterschiedlichen Winkeln α₁, α₂ und α₃ zu einer Senkrechten auf der Oberfläche 12 auftreffen, wobei gilt: α₁< α₂< α₃. Insbesondere sind die Sendeeinrichtungen 9 bis 11 dabei derart ausgerichtet, dass der Auftreffpunkt der Lichtstrahlen auf der Oberfläche 12 der Fahrbahn 2 in Vorwärtsfahrtrichtung vor den Sendeeinrichtungen 9, 10, 11 liegt, sodass die in Fahrtrichtung vor der Sensorvorrichtung 8 vorliegenden Oberfläche 12 der Fahrbahn 2 abgetastet wird.

Die Empfangseinrichtung 13 ist dabei in einem Winkel β zu der Senkrechten auf Fahrbahnoberfläche 12 ausgerichtet, der gemäß dem vorliegenden Ausführungsbeispiel größer ist als der Winkel α₃.

Weiterhin weist die Sensorvorrichtung 8 eine Empfangseinrichtung 13 auf, die ein Sensor-Array 14 zum Erfassen der an der Oberfläche 12 reflektierten Lichtstrahlen umfasst. Gemäß dem vorliegenden Ausführungsbeispiel weist das Sensor-Array 14 4x4, also insgesamt 16 matrixartig angeordnete Rezeptoren auf, die jeweils einen Helligkeitswert erfassen, wie anhand einer in Figur 2 dargestellten Helligkeitsverteilung 15 beispielhaft gezeigt ist. Durch das Nachverfolgen der Helligkeitsverteilungen durch das Sensor-Array 14 wird eine Relativgeschwindigkeit der Sensorvorrichtung 8 bezüglich der Fahrbahn 2 festgestellt. Dies erfolgt beispielsweise anhand bekannter Bildauswertungsalgorithmen.

Des Weiteren ist die Empfangseinrichtung dazu ausgebildet, die Wellenlängen λ₁, λ₂ und λ₃ beziehungsweise Wellenlängenänderungen der reflektierten Lichtstrahlen zu erfassten. In Abhängigkeit der erfassten Wellenlängen oder Wellenlängenänderungen wird die Beschaffenheit der Fahrbahnoberfläche 12 insbesondere in Bezug auf ihren Reibwert ermittelt.

Die Sensorvorrichtung 8 vereint somit die Funktionalität einer Reibwert- und Geschwindigkeitssensorik. Durch die Verwendung von zwei oder mehr der Infrarotlaserdioden zur Beleuchtung des Referenzobjekts beziehungsweise vorliegend der Fahrbahnoberfläche 12 und die Erfassung der reflektierten Lichtstrahlen mittels des Sensor-Array, insbesondere Fotodetektor-Arrays, werden die wellenlängenabhängigen Änderungen von optischen Eigenschaften der Fahrbahnoberfläche feststellbar. Durch die Nutzung von unterschiedlichen Wellenlängen λ₁, λ₂ und λ₃ ist darüber hinaus eine Redundanz der Geschwindigkeitsermittlung gewährleistet. Vorliegend ist vorgesehen, dass die Sendeeinrichtungen 9, 10 und 11 Infrarotlichtstrahlen mit den Wellenlängen λ₁=980nm, λ₂=1310nm und λ₃=1550nm erzeugen. Die Empfangseinrichtung 13 ist insbesondere als Infrarot-Breitbanddetektor ausgebildet. Die vorteilhafte Ausgestaltung der Sensorvorrichtung 8 bietet die Möglichkeit der Miniaturisierung bis hin zur Einbettung in einem einzigen Gehäuse 16, das wie in Figur 1 gezeigt, an der Karosserie des Fahrzeugs 1, insbesondere an der Unterseite der Karossiere des Fahrzeugs 1 anbringbar ist. Dadurch ist auch eine einfache Nachrüstung des Kraftfahrzeugs 1 beziehungsweise des Sicherheitssystems des Kraftfahrzeugs 1 möglich. Der Einbau der Sensorvorrichtung 8 ermöglicht die Verifizierung von Schlupf und Traktion jedes Rads 3, 4 beziehungsweise Reifens individuell durch direkte Messung.

Durch die Berücksichtigung der Wellenlängen oder Wellenlängenänderungen der reflektierten Lichtstrahlen ist es möglich, auch zwischen nasser, eisiger, schneebedeckter und trockener Fahrbahnoberfläche 12 zu unterscheiden, sodass das Sicherheitssystem 7 entsprechend angesteuert werden beziehungsweise die ermittelten Reibwerte berücksichtigen kann.

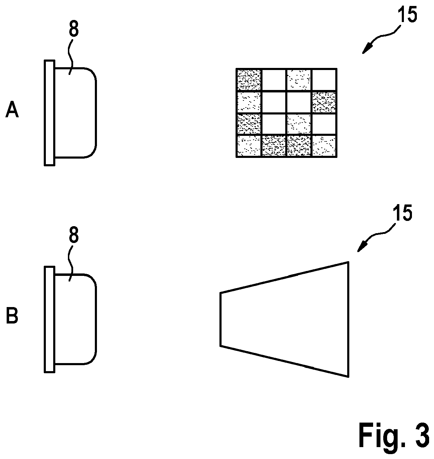

Die in Figur 2 dargestellte Konfiguration führt zu einer nichtlinearen Änderung der Bildbereiche durch eine Trapezprojektion auf das Sensor-Array 14, was anhand von Figur 3 näher erörtert werden soll.

Figur 3 zeigt zwei unterschiedliche Ausgestaltungen der Sensorvorrichtung 8, wobei gemäß einer ersten Ausgestaltung A die Sensorvorrichtung 8 dazu ausgebildet ist, die Lichtstrahlen senkrecht auf die Fahrbahnoberfläche 12 zu richten, während gemäß der zweiten Ausgestaltung B die Sensorvorrichtung wie in Figur 2 gezeigt, ausgebildet ist. Durch die schräge Ausrichtung der Sendeeinrichtungen 9, 10, 11 ergibt sich ein trapezförmiges Messfeld, wie in Figur 3B gezeigt. Diese Verzerrung der erfassten Sensordaten wird bevorzugt bei der Auswertung herausgerechnet. Um dies zu vermeiden wird die Sensorvorrichtung 8 alternativ derart ausgebildet, dass die Lichtstrahlen gemäß Ausgestaltung A senkrecht zu der Fahrbahnoberfläche 12 ausgerichtet werden, sodass sich ein quadratisches beziehungsweise unverzerrtes Messfeld auf der Fahrbahnoberfläche 12 ergibt. Die senkrechte Betrachtung hat den Vorteil, dass der Einfluss von Fahrzeugschwankungen und Bodenwelligkeiten miniert wird, sodass die Sensorvorrichtung 8 im Wesentlichen eine konstante Entfernung zu dem Referenzobjekt einhält, was die Auswertung der erfassten Daten erleichtert.

Durch die vorteilhafte Ausgestaltung der Sensorvorrichtung 1 beziehungsweise des Sicherheitssystems des Kraftfahrzeugs 1 werden insbesondere

Reibwertkarten für ein automatisiertes Fahren erstellt, welche beispielsweise eine ACC-Funktion und/oder eine ESP-, ABS- und/oder ASR-Funktion durch Erfassen der Reibwertdaten der Fahrbahnoberfläche 12 optimieren. Die erfassten Reibwerte beziehungsweise die erfasste Oberflächenbeschaffenheit der Fahrbahn 2 werden bevorzugt außerdem an andere Verkehrsteilnehmer per Funk oder sonstiger Datenverbindung, beispielsweise mittels Fahrzeug-zu-Fahrzeug-Kommunikation weitergeleitet.

## Patentansprüche

1. Sensorvorrichtung (8) für ein Fahrzeug (1), insbesondere Kraftfahrzeug, mit zumindest einer Sendeeinrichtung (9,10,11) zur Ausgabe eines Lichtstrahls mit einer vorgebbaren Wellenlänge (λ₁, λ₂, λ₃), mit wenigstens einer Empfangseinrichtung (13) zum Erfassen des zumindest einen an einem Objekt (2) reflektierten Lichtstrahls der Sendeeinrichtung (9,10,11), und mit einer Einrichtung (17), die in Abhängigkeit von dem zumindest einen erfassten reflektierten Lichtstrahl eine auf das Objekt bezogene Eigenschaft bestimmt, **dadurch gekennzeichnet, dass** die Empfangseinrichtung (13) ein Sensor-Array (14) zur Erfassung von Wellenlängen und/oder Wellenlängenänderungen, sowie von Helligkeitswerten als Helligkeitsverteilungen (15) der reflektierten Lichtstrahlen von zumindest zwei Sendeeinrichtungen (9,10,11) aufweist, dass das Sensor-Array (14) 4x4, also insgesamt sechzehn matrixartig angeordnete Rezeptoren aufweist, die jeweils dazu ausgebildet sind, einen der Helligkeitswerte erfassen, und dass die Einrichtung (17) dazu ausgebildet ist, in Abhängigkeit der erfassten Wellenlängen und/oder Wellenlängenänderungen zumindest eine Oberflächenbeschaffenheit des Objekts (2) sowie durch Nachverfolgen der Helligkeitsverteilungen (15) durch das Sensor-Array (14) eine Relativgeschwindigkeit der Sensorvorrichtung (8) zu dem Objekt (2) zu bestimmen.

2. Sensorvorrichtung nach Anspruch 1, wobei die Einrichtung (17) dazu ausgebildet ist, in Abhängigkeit von den erfassten Wellenlängen und/oder Wellenlängenänderungen einen Reibwert der Oberfläche (12) zu bestimmen.

3. Sensorvorrichtung nach einem der vorhergehenden Ansprüche, wobei die Sensorvorrichtung (8) mehrere Sendeeinrichtungen (9,10,11) aufweist, von denen zumindest zwei, insbesondere drei Lichtstrahlen mit unterschiedlichen Wellenlängen (λ₁, λ₂, λ₃) erzeugen.

4. Sensorvorrichtung nach einem der vorhergehenden Ansprüche, wobei die Sendeeinrichtungen (9,10,11) als Infrarotlaserdioden ausgebildet sind.

5. Sensorvorrichtung nach einem der vorhergehenden Ansprüche, wobei zumindest drei Laserdioden Lichtstrahlen mit unterschiedlichen Wellenlängen von λ₁=980nm, λ₂=1310 und λ₃=1550nm erzeugen.

6. Sensorvorrichtung nach einem der vorhergehenden Ansprüche, wobei die Empfangseinrichtung (13) als Infrarot-Breitbanddetektor ausgebildet ist.

7. Sicherheitssystem für ein Fahrzeug (1), insbesondere Kraftfahrzeug, mit wenigstens einer Sensorvorrichtung (8) zum Erfassen einer Fahrbahnbeschaffenheit, und mit wenigstens einer Aktoreinrichtung (6), die in Abhängigkeit von der durch die Sensorvorrichtung (8) erfassten Fahrbahnbeschaffenheit arbeitet oder angesteuert wird, **gekennzeichnet durch** die Ausbildung der Sensorvorrichtung (8) nach einem der Ansprüche 1 bis 6.

8. Sicherheitssystem nach Anspruch 7, wobei zumindest zwei Rädern des Fahrzeugs (1), insbesondere jedem Rad (3,4) des Fahrzeugs (1), jeweils eine der Sensorvorrichtungen (8) zugeordnet ist.

9. Sicherheitssystem nach einem der Ansprüche 7 oder 8, wobei die jeweilige Sensorvorrichtung (8) derart ausgebildet/angeordnet ist, dass der von ihr erzeugte Lichtstrahl senkrecht oder nahezu senkrecht auf die Oberfläche (12) der Fahrbahn (2) oder in einem Winkel (α₁,α₂,α₃) abweichend von einer Senkrechten auf die Oberfläche (12) der Fahrbahn (2) trifft.

10. Verfahren zum Betreiben einer Sensorvorrichtung (8) nach einem der Ansprüche 1 bis 6 oder eines Sicherheitssystems nach einem der Ansprüche 7 bis 9, **dadurch gekennzeichnet, dass** in Abhängigkeit von durch die Empfangseinrichtung (13) erfassten Helligkeitswerten, Wellenlängen und/oder Wellenlängenänderungen der reflektierten Lichtstrahlen eine Relativgeschwindigkeit der Sensorvorrichtung (8) zu dem Objekt (2) sowie ein Reibwert der Oberfläche (12) des Objekts (2) ermittelt werden.

## Claims

1. Sensor apparatus (8) for a vehicle (1), in particular a motor vehicle, having at least one transmitting unit (9, 10, 11) for emitting a light beam having a predefinable wavelength (λ₁, λ₂, λ₃), having at least one receiving unit (13) for capturing the at least one light beam of the transmitting unit (9, 10, 11) reflected on an object (2), and having a unit (17) which determines a property with respect to the object in dependence on the at least one captured reflected light beam, **characterized in that** the receiving unit (13) comprises a sensor array (14) for capturing wavelengths and/or wavelength changes, and also brightness values as brightness distributions (15), of the reflected light beams of at least two transmitting units (9, 10, 11), **in that** the sensor array (14) comprises 4×4, i.e. a total of 16, receptors arranged in matrix-like fashion and each designed to capture one of the brightness values, and **in that** the unit (17) is designed to determine at least one surface condition of the object (2) and, by tracking the brightness distributions (15) by way of the sensor array (14), a relative speed of the sensor apparatus (8) in relation to the object (2) in dependence on the captured wavelengths and/or wavelength changes.

2. Sensor apparatus according to Claim 1, wherein the unit (17) is designed for the purpose of determining a coefficient of friction of the surface (12) in dependence on the captured wavelengths and/or wavelength changes.

3. Sensor apparatus according to either of the preceding claims, wherein the sensor apparatus (8) comprises multiple transmitting units (9, 10, 11), of which at least two, in particular three generate light beams having different wavelengths (λ₁, λ₂, λ₃).

4. Sensor apparatus according to any of the preceding claims, wherein the transmitting units (9, 10, 11) are designed as infrared laser diodes.

5. Sensor apparatus according to any of the preceding claims, wherein at least three laser diodes generate light beams having different wavelengths of λ₁ = 980 nm, λ₂ = 1310 and λ₃ = 1550 nm.

6. Sensor apparatus according to any of the preceding claims, wherein the receiving unit (13) is designed as an infrared broadband detector.

7. Safety system for a vehicle (1), in particular a motor vehicle, having at least one sensor apparatus (8) for capturing a roadway condition, and having at least one actuator unit (6), which operates or is activated in dependence on the roadway condition captured by the sensor apparatus (8), **characterized by** the design of the sensor apparatus (8) according to any of Claims 1 to 6.

8. Safety system according to Claim 7, wherein at least two wheels of the vehicle (1), in particular every wheel (3, 4) of the vehicle (1), are/is each assigned a respective sensor apparatus (8).

9. Safety system according to either of Claims 7 and 8, wherein the respective sensor apparatus (8) is designed/arranged such that the light beam generated thereby is incident perpendicularly or nearly perpendicularly on the surface (12) of the roadway (2) or at an angle (α₁, α₂, α₃) deviating from a perpendicular on the surface (12) of the roadway (2) .

10. Method for operating a sensor apparatus (8) according to any of Claims 1 to 6 or a safety system according to any of Claims 7 to 9, **characterized in that** a relative speed of the sensor apparatus (8) in relation to the object (2) and a coefficient of friction of the surface (12) of the object (2) are ascertained in dependence on brightness values, wavelengths and/or wavelength changes of the reflected light beams captured by the receiving unit (13) .

## Revendications

1. Dispositif formant capteur (8) destiné à un véhicule (1), notamment un véhicule automobile, ledit dispositif comprenant
au moins un module d'émission (9, 10, 11) destiné à émettre un faisceau lumineux d'une longueur d'onde spécifiée (λ₁, λ₂, λ₃), au moins un module de réception (13) destiné à détecter l'au moins un faisceau lumineux du module d'émission (9, 10, 11) qui est réfléchi par un objet (2), et un module (17) qui détermine une propriété, liée à l'objet, en fonction de l'au moins un faisceau lumineux réfléchi détecté,
**caractérisé en ce que** le module de réception (13) comporte un réseau de capteurs (14) destiné à détecter des longueurs d'onde et/ou des variations de longueur d'onde, ainsi que des valeurs de luminosité en tant que répartitions de luminosité (15) des faisceaux lumineux réfléchis provenant d'au moins deux modules d'émission (9, 10, 11), **en ce que** le réseau de capteurs (14) comporte 4x4, soit un total de seize, récepteurs disposés de manière matricielle, qui sont chacun conçus pour détecter l'une des valeurs de luminosité, et **en ce que** le module (17) est conçu pour déterminer, en fonction des longueurs d'onde et/ou variations de longueur d'onde détectées, au moins un état de surface de l'objet (2) et, en suivant les distributions de luminosité (15) à travers le réseau de capteurs (14), une vitesse relative du dispositif formant capteur (8) par rapport à l'objet (2).

2. Dispositif formant capteur selon la revendication 1, le module (17) étant conçu pour déterminer une valeur de friction de la surface (12) en fonction des longueurs d'onde et/ou variations de longueur d'onde détectées.

3. Dispositif formant capteur selon l'une des revendications précédentes, le dispositif formant capteur (8) comportant plusieurs modules d'émission (9, 10, 11) dont au moins deux, en particulier trois, génèrent des faisceaux lumineux de différentes longueurs d'onde (λ₁, λ₂, λ₃).

4. Dispositif formant capteur selon l'une des revendications précédentes, les modules d'émission (9, 10, 11) étant réalisés sous la forme de diodes laser infrarouges.

5. Dispositif formant capteur selon l'une des revendications précédentes, au moins trois diodes laser générant des faisceaux lumineux de différentes longueurs d'onde de λ₁ = 980 nm, λ₂ = 1310 et λ₃ = 1550 nm.

6. Dispositif formant capteur selon l'une des revendications précédentes, le module de réception (13) étant conçu comme un détecteur infrarouge à large bande.

7. Système de sécurité destiné à un véhicule (1), en particulier un véhicule automobile, ledit système de sécurité comprenant au moins un dispositif formant capteur (8) destiné à détecter un état de la chaussée, et au moins un module formant actionneur (6) qui fonctionne ou est commandé en fonction de l'état de la chaussée détecté par le dispositif formant capteur (8), **caractérisé par** la conception du dispositif formant capteur (8) selon l'une des revendications 1 à 6.

8. Système de sécurité selon la revendication 7, au moins deux roues du véhicule (1), en particulier chaque roue (3, 4) du véhicule (1), étant respectivement associées à l'un des dispositifs formant capteur (8).

9. Système de sécurité selon l'une des revendications 7 ou 8, le dispositif formant capteur respectif (8) étant conçu/disposé de manière à ce que le faisceau lumineux qu'il génère soit perpendiculaire ou à peu près perpendiculaire à la surface (12) de la chaussée (2) ou forme un angle (α₁, α₂, α₃) s'écartant d'une perpendiculaire à la surface (12) de la chaussée (2).

10. Procédé de fonctionnement d'un dispositif formant capteur (8) selon l'une des revendications 1 à 6 ou un système de sécurité selon l'une des revendications 7 à 9, **caractérisé en ce qu'**une vitesse relative du dispositif formant capteur (8) par rapport à l'objet (2) et une valeur de friction de la surface (12) de l'objet (2) sont déterminées en fonction de valeurs de luminosité, de longueurs d'onde et/ou de variations de longueur d'onde, détectées par le module de réception (13), des faisceaux lumineux réfléchis.
